# DEMANDE DE BREVET EUROPEEN

(11) **EP 4 382 364 A1**
(43) Date de publication de la demande: **12.06.2024**
(21) Numéro de dépôt: 23206808.0
(22) Date de dépôt: 30.10.2023
(51) Int. Cl.: B60R 1/06, B62D 23/00

(54) **SUPPORT DE FIXATION D'UN RÉTROVISEUR EXTÉRIEUR SUR UN MONTANT DE LA STRUCTURE DE CAISSE D'UN VÉHICULE**

(30) Priorité: 09.12.2022 FR 2213047
(71) Demandeur: Stellantis Auto SAS, 78300 Poissy (FR)
(72) Inventeur: BENZGUER, REDA, 11000 SALE (MA); MRIROUD, ANOUAR, 52000 ERRACHIDIA (MA)

(57) **Abrégé**

L'invention concerne un support de fixation (100) d'un rétroviseur extérieur de véhicule sur un montant de la structure de caisse dudit véhicule, ledit support étant obtenu par pliage et/ou emboutissage à partir d'une feuille de tôle métallique et comportant :
- une première aile (110) comprenant des premiers moyens de fixation (111) permettant de fixer ledit support sur ledit montant ;
- une seconde aile (120) comprenant des seconds moyens de fixation (121, 122) permettant d'y arrimer rigidement ledit rétroviseur extérieur ;
caractérisé en ce qu'il comporte également un crochet de pré-maintien (131) apte à coopérer avec une lumière ménagée sur ledit montant pour maintenir ce support en position de montage contre ledit montant avant sa fixation.

## Description

### [Domaine technique]

La présente invention a trait au domaine des véhicules légers de type tricycle ou quadricycle présentant une taille compacte particulièrement adaptée à un usager urbain.

Elle vise plus particulièrement un support de fixation d'un rétroviseur extérieur sur un montant de la structure de caisse d'un tel véhicule.

### [Technique antérieure]

L'augmentation continue du nombre de véhicules en circulation pose de nombreux problèmes de congestion liés à la circulation et au stationnement de ces véhicules, notamment dans les zones de centre-ville.

Afin de faciliter la circulation et le stationnement, un nombre toujours croissant d'usagers se tourne vers des engins motorisés à deux roues de type motos ou scooters mais ces derniers n'offrent pas le même niveau de sécurité et de protection contre les intempéries au conducteur et à son éventuel passager.

Pour ces raisons, ces dernières années ont vu le l'apparition sur le marché de véhicules légers à propulsion électrique de type tricycle ou quadricycle dont les dimensions réduites sont particulièrement adaptées à un usage en milieu urbain.

Un tel véhicule léger comporte classiquement une structure de caisse métallique dont au moins l'un des flancs latéraux comprend un encadrement délimitant une ouverture d'accès à l'habitacle éventuellement refermable par une portière latérale montée articulée sur cette structure de caisse.

Ces véhicules légers de type tricycle ou quadricycle sont généralement équipés d'au moins un rétroviseur extérieur fixé classiquement sur la structure d'une portière latérale correspondante.

Pour des raisons de coût et/ou de limitation de la masse, certains de ces véhicules légers sont dépourvus de portières latérales de sorte que ledit au moins un rétroviseur extérieur doit être fixé sur le montant avant de l'encadrement d'une ouverture d'accès correspondante.

Afin de réaliser la fixation d'un rétroviseur extérieur sur un tel montant de la structure de caisse d'un véhicule, il est connu du document FR 2 829 232 A1 d'utiliser un support de fixation en forme d'équerre obtenu par emboutissage à partir d'une feuille de tôle métallique.

Le support de fixation comporte une première aile pourvue d'un premier orifice de fixation permettant de le fixer par vissage audit montant.

Ce support de fixation comprend également une seconde aile pourvue d'un second orifice de fixation permettant d'y arrimer rigidement le rétroviseur extérieur.

Pour solidariser fixement le support audit montant de la structure de caisse du véhicule, l'opérateur doit en premier lieu positionner ce support contre ce montant de sorte que le premier orifice de fixation se juxtapose avec un trou de fixation correspondant ménagé dans ce même montant.

Tout en assurant le plaquage de ce support dans la position adéquate, cet opérateur doit ensuite engager une vis au travers de ce premier orifice et de ce trou de fixation puis procéder à son vissage à l'aide d'une visseuse électrique sur un écrou serti sur le pourtour de ce trou.

Le plaquage du support monopolisant une première main de l'opérateur en charge du montage, celui-ci ne dispose plus que d'une seule main pour engager la vis et procéder à son vissage. De fait, les opérations de mise en place d'un tel support sont particulièrement délicates à réaliser et augmentent sensiblement la durée du cycle de montage.

En outre, le faible écartement entre ce premier orifice et la seconde aile du support ne permet pas toujours l'introduction de la tête d'une visseuse électrique ce qui contraint l'opérateur à réaliser l'opération de vissage à l'aide d'un simple tournevis et entraine également une augmentation sensible de la durée du cycle de montage.

### [Exposé de l'invention]

La présente invention vise donc à faciliter les opérations de montage d'un tel support de fixation d'un rétroviseur extérieur sur un montant de la structure de caisse d'un véhicule.

Elle propose à cet effet un support de fixation d'un rétroviseur extérieur de véhicule sur un montant de la structure de caisse dudit véhicule, ledit support étant obtenu par pliage et/ou emboutissage à partir d'une feuille de tôle métallique et comportant :
- une première aile comprenant des premiers moyens de fixation permettant de fixer ledit support sur ledit montant ;
- une seconde aile comprenant des seconds moyens de fixation permettant d'y arrimer rigidement ledit rétroviseur extérieur ;
caractérisé en ce qu'il comporte également un crochet de pré-maintien apte à coopérer avec une lumière ménagée sur ledit montant pour maintenir ce support en position de montage contre ledit montant avant sa fixation.

L'adjonction d'un tel crochet de pré-maintien permet ainsi à l'opérateur en charge du montage de disposer de ses deux mains pour réaliser la fixation de ce support sur le montant, ce qui lui facilite la tache tout participant à l'amélioration de la sécurité.

En outre, la présence de ce crochet garantit systématiquement un positionnement correct du support vis-à-vis de ce montant.

Selon des caractéristiques préférées dudit support de fixation selon l'invention :
- ledit crochet de pré-maintien présente sensiblement une forme de T et comprend un jambage s'étendant jusqu'à une tête de crochetage saillant latéralement de part et d'autre dudit jambage ;
- ladite tête de crochetage présente un profil biseauté ;
- lesdits premiers moyens de fixation comprennent un premier orifice de vissage, ladite première aile présentant un premier soyage formant un décrochement entre deux portions de cette première aile dans l'une desquelles est ménagée ledit premier orifice de vissage ;
- ledit support présente une section sensiblement en forme de Z à angles droits de sorte à comporter également une troisième aile reliant ladite première aile à ladite seconde aile et s'étendant suivant un plan moyen sensiblement perpendiculaire à ceux sensiblement parallèles desdites première et secondes ailes ;
- ledit crochet de pré-maintien prend racine depuis le bord supérieur de ladite troisième aile en étant replié de sorte à s'étendre suivant une direction sensiblement perpendiculaire au plan moyen de cette troisième aile ;
- ladite troisième aile présente un second soyage formant un décrochement entre deux portions de cette troisième aile depuis l'une desquelles s'étend ledit crochet de pré-maintien ;
- ledit support présente au moins un bossage ou une nervure de renfort réalisé par emboutissage au niveau de la zone de jonction entre lesdites seconde et troisième ailes ; et/ou
- lesdits seconds moyens de fixation comprennent un second orifice circulaire de vissage ainsi qu'un trou d'indexage anti-rotation prévu pour être traversé par un pion solidaire dudit rétroviseur extérieur.

L'invention vise également sous un second aspect, un véhicule léger de type tricycle ou quadricycle dépourvu de portières latérales et comportant une structure de caisse dont au moins l'un des flancs latéraux comprend un encadrement délimitant une ouverture d'accès à l'habitacle, ledit véhicule comprenant en outre au moins un rétroviseur extérieur fixé sur le montant avant d'un dit encadrement par l'intermédiaire d'un tel support de fixation.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue en perspective de la structure de caisse d'un véhicule quadricycle pourvu de deux encadrements latéraux délimitant des ouvertures d'accès et sur le montant avant de l'un desquels est monté un rétroviseur extérieur par l'intermédiaire d'un support de fixation selon l'invention ;
- [Fig 2] est une vue agrandie en perspective sous un autre angle de la zone d'implantation du rétroviseur extérieur ;
- [Fig 3] représente une vue en perspective du support de fixation seul ;
- [Fig 4] est un agrandissement d'une portion du montant avant accueillant le support de fixation selon l'invention ; et
- [Fig 5] représente une vue en coupe horizontale de la zone de la figure 2, prise au niveau de la vis de fixation du support sur le montant avant.

### [Description détaillée]

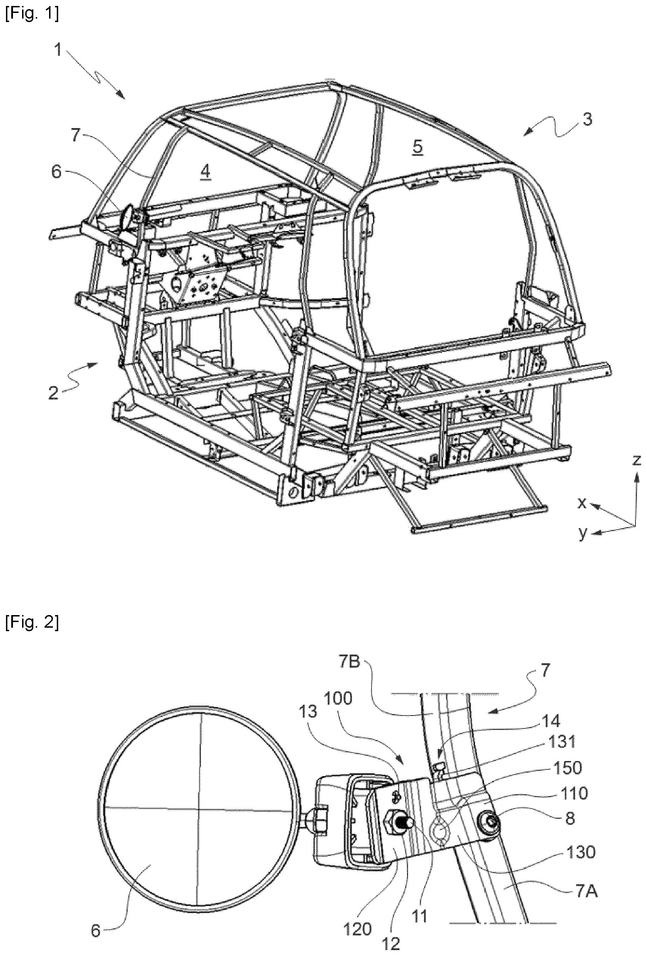

La figure 1 représente une vue partielle de la structure de caisse 1 d'un véhicule léger à propulsion électrique de type quadricycle, dépourvu de portières latérales.

On définit par rapport à cette structure de caisse 1 un repère orthogonal XYZ comprenant trois axes perpendiculaires deux à deux, à savoir :
- un axe X, définissant une direction longitudinale, horizontale,
- un axe Y, définissant une direction transversale, horizontale, qui avec l'axe X définit un plan XY horizontal, et
- un axe Z, définissant une direction verticale, perpendiculaire au plan XY horizontal.

Dans la suite de la description et en référence au repère défini ci-dessus, les termes « longitudinal » ou « longitudinalement » feront référence à une direction parallèle à l'axe X, les termes « transversal » ou « transversalement » feront référence à une direction parallèle à l'axe Y, et les termes « vertical » ou « verticalement » feront référence à une direction parallèle à l'axe Z.

D'autre part et par convention, les termes « inférieur », « supérieur », « avant » et « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction horizontale.

Les termes « externe » et « interne » seront quant à eux utilisés pour définir la position relative d'un élément par référence au plan longitudinal vertical médian du véhicule. L'élément le plus proche de ce plan sera ainsi qualifié d'interne par opposition à l'autre élément plus éloigné de ce même plan qui sera quant à lui qualifié d'externe.

Par ailleurs, le terme « sensiblement » sera utilisé pour indiquer qu'un léger écart est admis par rapport à une position ou orientation nominale prédéterminée, tout en restant inclus dans le cadre de l'invention. Par exemple, les expressions « sensiblement parallèle » et « sensiblement perpendiculaire » indiqueront respectivement qu'un écart de l'ordre de 15 à 20° par rapport à une orientation strictement parallèle et strictement perpendiculaire est admis dans le cadre de l'invention.

Réalisée à partir de pièces métalliques assemblées les unes aux autres par mécano soudage, la structure de caisse 1 comporte deux flancs latéraux gauche 2 et droit 3 comprenant chacun un encadrement respectif 4, 5 délimitant une ouverture d'accès à l'habitacle.

Un rétroviseur extérieur 6 est par ailleurs monté fixement sur le montant tubulaire avant 7 à section rectangulaire (sensiblement carrée) de l'encadrement 4 du flanc latéral gauche 2 de cette structure de caisse 1.

Comme on peut le constater sur la figure 2, ce montage du rétroviseur extérieur 6 est assuré par l'intermédiaire d'un support de fixation 100 selon l'invention.

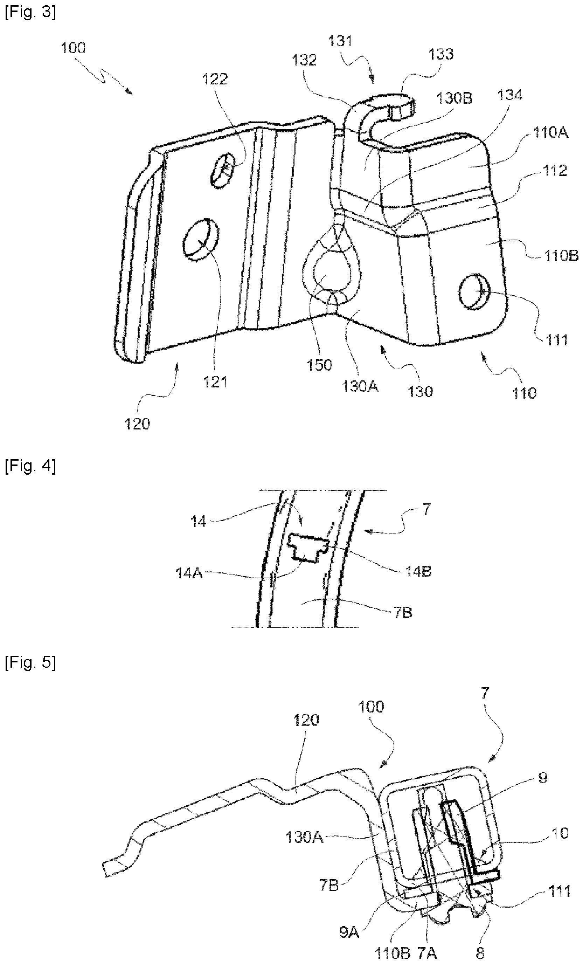

On va maintenant décrire en détails ce support de fixation 100 en référence à la figure 3.

Le support de fixation 100 est obtenu par pliage et/ou emboutissage à partir d'une feuille de tôle métallique (de préférence en acier double-phase) préalablement découpée et présentant une épaisseur comprise par exemple entre 1,3 et 1,6 mm.

Présentant une section sensiblement en forme de Z à angles droits, le support de fixation 100 comporte :
- une première aile 110 comprenant des premiers moyens de fixation permettant de fixer ce support 100 sur le montant avant 7 de la structure de caisse 1 du véhicule ;
- une seconde aile 120 s'étendant suivant un plan moyen sensiblement parallèle à la première aile 110 et comprenant des seconds moyens de fixation permettant d'y arrimer rigidement le rétroviseur extérieur 6 ; et
- une troisième aile 130 reliant la première aile 110 à la seconde aile 120 et s'étendant suivant un plan moyen sensiblement perpendiculaire à ceux de ces première et secondes ailes 110, 120.

Les premiers moyens de fixation permettant de fixer le support 100 sur le montant 7 comprennent un premier orifice circulaire de vissage 111 prévu, tel qu'illustré par les figures 2 et 5, pour être traversé par une vis 8 venant ensuite se visser sur un écrou 9 (visible uniquement sur la figure 5) serti sur le pourtour d'un trou circulaire 10 ménagé dans la paroi arrière 7A du montant 7.

Afin d'assurer un bon plaquage du support 100 contre cette paroi arrière 7A du montant 7 malgré la présence de la collerette 9A de l'écrou 9 formant un relief sur le pourtour du trou 10 (voir figure 5), la première aile 110 présente avantageusement un premier soyage 112 formant un décrochement sur une hauteur prédéterminée correspondant à l'épaisseur de cette collerette 9A entre, une portion supérieure 110A de cette première aile 110 destinée à venir se plaquer directement contre la paroi arrière 7A du montant 7, et une portion inférieure 110B de cette première aile 110 destinée à venir se plaquer contre la collerette 9A et dans laquelle est ménagée l'orifice de vissage 111 (voir figure 5).

Selon les caractéristiques de l'écrou serti 9, la hauteur prédéterminée de ce premier soyage 112 sera ainsi comprise de préférence entre 0,5 et 2 millimètres.

Les seconds moyens de fixation permettant d'arrimer rigidement le rétroviseur extérieur 6 à ce support 100 comprennent un second orifice circulaire de vissage 121 prévu, tel qu'illustré par la figure 2, pour être traversé par un goujon 11 solidaire du rétroviseur extérieur 6 et sur lequel on vient ensuite visser un écrou de serrage 12.

Afin d'assurer un positionnement angulaire parfait du rétroviseur extérieur 6 et d'éviter tout risque de rotation accidentelle de ce dernier au cours de la vie du véhicule, ces seconds moyens de fixation comprennent également un trou d'indexage anti-rotation 122 prévu, tel qu'illustré par la figure 2, pour être traversé par un pion 13 solidaire de ce rétroviseur extérieur 6.

Selon l'invention et afin de le maintenir dans sa position de montage contre le montant 7 avant sa fixation définitive par vissage, le support 100 comporte en outre des moyens de pré-maintien aptes à coopérer avec des moyens complémentaires ménagés sur ce montant 7.

Ces moyens de pré-maintien sont constitués par un crochet 131 sensiblement en forme de T, comprenant un jambage 132 prenant racine depuis le bord supérieur de la troisième aile 130 en étant replié de sorte à s'étendre suivant une direction sensiblement perpendiculaire au plan moyen de cette troisième aile 130 jusqu'à une tête de crochetage 133 saillant latéralement de part et d'autre de ce jambage 132.

Ce crochet 131 est prévu pour coopérer avec une lumière 14 ménagée sur la paroi externe 7B du montant 7 et représentée sur la figure 4, cette lumière 14 présentant également une forme en T en étant constituée d'une portion inférieure 14A surmontée par une portion supérieure élargie 14B saillant latéralement de part et d'autre de cette portion inférieure 14A.

La largeur de la portion supérieure élargie 14B de la lumière 14 est légèrement supérieure à celle de la tête de crochetage 133 de sorte à permettre l'introduction de cette dernière au travers de cette portion supérieure 14B.

De même, la largeur de la portion inférieure 14A est légèrement supérieure à celle du jambage 132 de sorte à permettre, après l'introduction de la tête de crochetage 133 au travers de la tête 14B, le coulissement vertical du support 100 le long de cette portion inférieure 14A jusqu'à ce que le jambage 132 vienne en butée contre le bord inférieur de la lumière 14.

La largeur de cette portion inférieure 14A étant en outre inférieure à celle de la tête de crochetage 133, tout retrait de cette dernière est désormais impossible, ce qui permet ainsi d'assurer le pré-maintien du support 100 sur le montant 7.

L'opérateur dispose ainsi de ses deux mains pour engager la vis 8 au travers du premier orifice de vissage 111 et procéder à son vissage sur l'écrou serti 9, ce qui facilite nettement ces opérations et améliore également la sécurité.

Tel qu'illustré par la figure 3 et afin de faciliter l'introduction de la tête de crochetage 133 au travers de la portion supérieure élargie 14B de la lumière 14, cette tête de crochetage 133 présente avantageusement un profil biseauté.

On remarquera que l'agencement du premier orifice de vissage 111 sur la première aile 110, associé à conformation particulière du support de fixation 100 présentant une section en forme de Z à angles droits, permettent de libérer la zone de vissage autour de cet orifice 111 de sorte que cette opération de vissage de la vis 8 puisse être réalisée à l'aide d'une visseuse électrique (aucun autre élément de ce support 100 ne gênant le déplacement de la tête d'une telle visseuse).

En référence de nouveau à la figure 3 et afin d'assurer un bon plaquage du support 100 contre la paroi externe 7B du montant 7 malgré la présence du crochet 131 dont le repli forme un léger relief venant en butée contre le bord de la lumière 14, la troisième aile 130 présente avantageusement un second soyage 134 formant un décrochement sur une hauteur prédéterminée correspondant à l'épaisseur de ce relief entre, une portion inférieure 130A de cette troisième aile 130 destinée à venir se plaquer directement contre la paroi externe 7B du montant 7, et une portion supérieure 130B de cette troisième aile 130 depuis laquelle s'étend le crochet 131.

Enfin et avec pour objectif de renforcer la tenue mécanique à la torsion de la seconde aile 120 recevant le rétroviseur 6 vis-à-vis du reste du support 100 plaqué fixement contre le montant 7, ce support 100 présente avantageusement au moins un bossage ou une nervure de renfort 150 réalisé par emboutissage au niveau de la zone de jonction entre les seconde et troisième ailes 120, 130.

Selon des variantes de réalisation non représentées, le support de fixation 100 peut être conformé différemment.

Celui-ci peut par exemple présenter une forme d'équerre et comporter ainsi uniquement :
- une première aile comprenant les premiers moyens de fixation permettant de fixer ce support sur la paroi d'un montant de la structure de caisse et depuis laquelle s'étend le crochet de pré-maintien destiné à coopérer avec une lumière ménagée sur cette paroi, et
- une seconde aile s'étendant suivant un plan moyen sensiblement perpendiculaire à la première aile et comprenant des seconds moyens de fixation permettant d'y arrimer rigidement le rétroviseur extérieur.

Une telle conformation du support présente cependant pour inconvénient de ne pas permettre l'emploi d'une visseuse électrique.

On rappellera enfin que l'invention n'est pas limitée aux formes de réalisation particulières qui ont été décrites ici à titre d'exemple et que de nombreuses autres variantes de réalisation sont envisageables sans sortir du cadre de cette invention. 1

## Revendications

1. Support de fixation (100) d'un rétroviseur extérieur (6) de véhicule sur un montant (7) de la structure de caisse (1) dudit véhicule, ledit support (100) étant obtenu par pliage et/ou emboutissage à partir d'une feuille de tôle métallique et comportant :
- une première aile (110) comprenant des premiers moyens de fixation (111) permettant de fixer ledit support (100) sur ledit montant (7) ;
- une seconde aile (120) comprenant des seconds moyens de fixation (121, 122) permettant d'y arrimer rigidement ledit rétroviseur extérieur (6) ;
**caractérisé en ce qu'**il comporte également un crochet de pré-maintien (131) apte à coopérer avec une lumière (14) ménagée sur ledit montant (7) pour maintenir ce support (100) en position de montage contre ledit montant (7) avant sa fixation.

2. Support de fixation (100) selon la revendication 1, **caractérisé en ce que** ledit crochet de pré-maintien (131) présente sensiblement une forme de T et comprend un jambage (132) s'étendant jusqu'à une tête de crochetage (133) saillant latéralement de part et d'autre dudit jambage (132).

3. Support de fixation (100) selon la revendication 2, **caractérisé en ce que** ladite tête de crochetage (133) présente un profil biseauté.

4. Support de fixation (100) selon l'une des revendications 1 à 3, **caractérisé en ce que** lesdits premiers moyens de fixation comprennent un premier orifice de vissage (111), ladite première aile (110) présentant un premier soyage (112) formant un décrochement entre deux portions (110A, 110B) de cette première aile (110) dans l'une (110B) desquelles est ménagée ledit premier orifice de vissage (111).

5. Support de fixation (100) selon l'une des revendications 1 à 4, **caractérisé en ce qu'**il présente une section sensiblement en forme de Z à angles droits de sorte à comporter également une troisième aile (130) reliant ladite première aile (110) à ladite seconde aile (120) et s'étendant suivant un plan moyen sensiblement perpendiculaire à ceux sensiblement parallèles desdites première et secondes ailes (110, 120).

6. Support de fixation (100) selon la revendication 5, **caractérisé en ce que** ledit crochet de pré-maintien (131) prend racine depuis le bord supérieur de ladite troisième aile (130) en étant replié de sorte à s'étendre suivant une direction sensiblement perpendiculaire au plan moyen de cette troisième aile (130).

7. Support de fixation (100) selon l'une des revendications 5 ou 6, **caractérisé en ce que** ladite troisième aile (130) présente un second soyage (134) formant un décrochement entre deux portions (130A, 130B) de cette troisième aile (130) depuis l'une (130B) desquelles s'étend ledit crochet de pré-maintien (131).

8. Support de fixation (100) selon l'une des revendications 5 à 7, **caractérisé en ce qu'**il présente au moins un bossage ou une nervure de renfort (150) réalisé par emboutissage au niveau de la zone de jonction entre lesdites seconde et troisième ailes (120, 130).

9. Support de fixation (100) selon l'une des revendications 1 à 8, **caractérisé en ce que** lesdits seconds moyens de fixation comprennent un second orifice circulaire de vissage (121) ainsi qu'un trou d'indexage anti-rotation (122) prévu pour être traversé par un pion (13) solidaire dudit rétroviseur extérieur (6).

10. Véhicule léger de type tricycle ou quadricycle dépourvu de portières latérales et comportant une structure de caisse (1) dont au moins l'un des flancs latéraux (2, 3) comprend un encadrement (4, 5) délimitant une ouverture d'accès à l'habitacle, ledit véhicule comprenant en outre au moins un rétroviseur extérieur (6) fixé sur le montant avant (7) d'un dit encadrement (4) par l'intermédiaire d'un support de fixation (100) ; **caractérisé en ce que** ledit support de fixation (100) est conforme à l'une des revendications 1 à 9.
